# EUROPEAN PATENT APPLICATION

(11) **EP 4 848 345 A1**
(43) Date of publication of application: **02.12.2026**
(21) Application number: 25854638.1
(22) Date of filing: 11.08.2025
(51) Int. Cl.: H01M 4/04, H01M 4/139, H01M 10/052, B23K 26/0622, B23K 26/082, B23K 26/06

(54) **NEGATIVE ELECTRODE MANUFACTURING APPARATUS AND NEGATIVE ELECTRODE MANUFACTURING METHOD**

(30) Priority: 14.08.2024 KR 20240108991
(71) Applicant: LG Energy Solution, Ltd., Seoul 07335 (KR)
(72) Inventor: KIM, Gil Woo, Daejeon 34122 (KR); MOON, Hong Seok, Daejeon 34122 (KR); KIM, Tae Su, Daejeon 34122 (KR); KIM, Ji Sung, Daejeon 34122 (KR); LEE, Heon Seung, Daejeon 34122 (KR)
(74) Representative: Plasseraud IP
(86) International application number: PCT/KR2025/012104
(87) International publication number: WO 2026/038831

(57) **Abstract**

A negative electrode manufacturing device related to one example of the present invention is a negative electrode manufacturing device for forming cavities in a surface of a current collector coated with a negative electrode active material, wherein the negative electrode manufacturing device comprises a nanosecond pulse laser unit emitting a nanosecond pulse laser beam, a scanner scanning the emitted nanosecond pulse laser beam onto a surface of a negative electrode base material, and an air levitation unit spraying air toward the negative electrode base material in a direction toward the scanner, to support the negative electrode base material.

## Description

### Technical Field

The present invention relates to a secondary battery negative electrode manufacturing device and a secondary battery negative electrode manufacturing method, and more specifically, relates to a negative electrode manufacturing method and a negative electrode manufacturing device for forming cavities on a surface of a negative electrode active material using a nanosecond pulse laser, and a high-performance secondary battery manufactured through the same.

This application claims the benefit of priority from Korean Patent Application No. 10-2024-0108991 dated August 14, 2024, the entire disclosure of which is incorporated herein by reference.

### Background Art

Secondary batteries are a core energy storage device in modern industries, and their importance increases day by day, particularly, in the electric and hybrid vehicle industries. Accordingly, performance improvement of secondary batteries, particularly, improvement of their fast-charging capabilities, emerges as an important task.

Currently, a negative electrode structuring technology attracts attention as one of various methods for improving the fast-charging capabilities of secondary batteries. This technology is a method of shortening an electrolyte impregnation time, shortening a lithium-ion diffusion path, and improving ionic conductivity by processing cavities on a negative electrode base material surface. Through this, it is possible to obtain an effect of improving cycle life and suppressing lithium precipitation in fast-charging environments.

A laser processing technology is used for negative electrode structuring, and methods using picosecond or femtosecond lasers have been researched primarily. However, these ultrashort-wave lasers had low pulse energy, thereby making it difficult to form deep cavities, and to form deep cavities, the processing time had been increased, so that there was a disadvantage of being unsuitable for mass production.

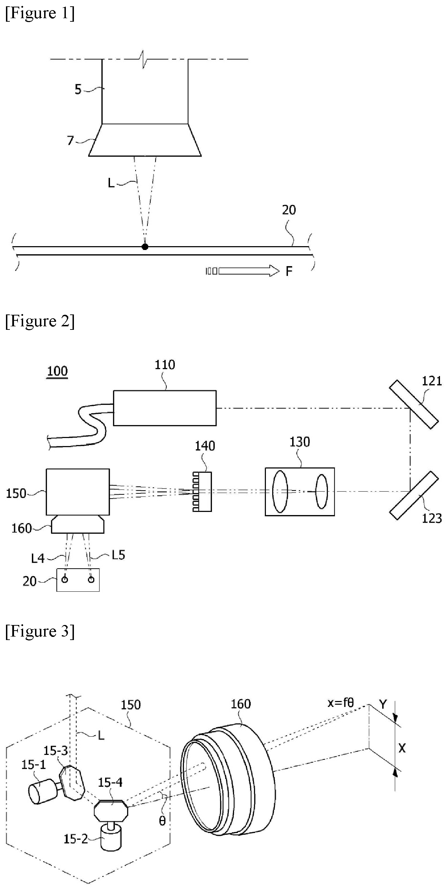

Figure 1 is a schematic diagram showing a typical negative electrode structuring laser processing method.

Referring to Figure 1, in the existing laser processing method, the laser was also irradiated on a single region. In this instance, in a state where positions of a scanner (5) and an F-theta lens (7) are fixed, it is irradiated on a negative electrode base material (20) in a dot form by setting the irradiation direction of the laser beam (L) to be vertical.

Furthermore, it was also a critical task to uniformly process the entire surface of the negative electrode active material of the large-area negative electrode base material (20).

Therefore, it is necessary to develop a new negative electrode structuring technology suitable for mass production while effectively improving the fast-charging capability of the secondary battery.

### Disclosure

### Technical Problem

The present invention aims to solve the problems occurring in conventional negative electrode manufacturing processes.

Through one example of the present invention, it is intended to provide a negative electrode manufacturing method and a negative electrode manufacturing device, capable of performing high-speed structuring using a nanosecond pulse laser unit and a diffraction optics system.

Also, through another example of the present invention, it is intended to provide a negative electrode manufacturing method and a negative electrode manufacturing device, capable of minimizing flow and vibration of a negative electrode base material by spraying air toward the negative electrode base material upon a structuring process.

Furthermore, through one example of the present invention, it is intended to provide a negative electrode manufacturing method and a negative electrode manufacturing device, capable of effectively increasing a speed of a structuring process, as a nanosecond pulse later unit forms cavities in a negative electrode base material using a single-shot method.

In addition, through one example of the present invention, it is intended to provide a negative electrode manufacturing method and a negative electrode manufacturing device, capable of uniformly forming cavities of a negative electrode base material in an electrode-length direction at regular intervals using multi-beam splitting through a diffraction optics system and single-row arrangement of multiple scanners, and effectively increasing a speed of structuring fixation.

Finally, through one example of the present invention, it is intended to manufacture a high-quality negative electrode comprising uniformly distributed cavities, and to manufacture a secondary battery, in which a lithium-ion migration path is shortened and an impregnation property of an electrolyte is improved, using the same.

### Technical Solution

To solve the above-described problems, a negative electrode manufacturing device related to one example of the present invention is a negative electrode manufacturing device for forming cavities in a surface of a current collector coated with a negative electrode active material, wherein the negative electrode manufacturing device comprises a nanosecond pulse laser unit emitting a nanosecond pulse laser beam, a scanner scanning the emitted nanosecond pulse laser beam onto a surface of a negative electrode base material, and an air levitation unit spraying air toward the negative electrode base material in a direction toward the scanner, to support the negative electrode base material.

The air levitation unit may spray air to apply a surface pressure to the negative electrode base material.

The negative electrode base material may be arranged to pass between the scanner and the air levitation unit. As one example, if the scanner is disposed at the top of the negative electrode base material, the air levitation unit may be disposed at the bottom of the negative electrode base material. In this instance, the air levitation unit is arranged to spray air at the bottom of the negative electrode base material in a direction toward the scanner. Furthermore, if the scanner is disposed at the bottom of the negative electrode base material, the air levitation unit may be disposed at the top of the negative electrode base material. In this instance, the air levitation unit is arranged to spray air at the top of the negative electrode base material in a direction toward the scanner.

The nanosecond pulse laser unit may irradiate the surface of the negative electrode base material with the nanosecond pulse laser beam in a multi-shot manner or a single-shot manner.

The pulse energy of the nanosecond pulse laser beam may be set to be 0.2 mJ or more and 2.0 mJ or less, and the cavity, which is, accordingly, formed, may be arranged to have a depth of 20 µm or more and 50 µm or less.

In another example of the present invention, the negative electrode manufacturing device may comprise a diffraction optics system for splitting the laser beam emitted from the nanosecond pulse laser unit into multiple beams.

A plurality of scanners may be disposed on the negative electrode base material, and each scanner may be arranged to form a cavity for a pre-designated region. That is, the respective scanners may be arranged to form the respective cavities in pre-designated regions on the negative electrode base material. As one example, the plurality of scanners may be disposed in a single row along the electrode-length direction of the negative electrode base material.

The scanner may be arranged to scan multiple beams in a single-shot manner that the laser beam is irradiated to each location only once.

Furthermore, the negative electrode manufacturing device may comprise a transfer roller for transferring the negative electrode base material. The negative electrode manufacturing device may be arranged to form cavities while traveling the negative electrode base material through the transfer roller. That is, the scanner and the air injection unit may operate during traveling of the negative electrode base material.

A negative electrode manufacturing method according to one example of the present invention comprises a transfer step of transferring a negative electrode base material in which a negative electrode active material is coated on a current collector, and a cavity formation step of irradiating the surface of the current collector coated with the negative electrode active material with a nanosecond pulsed laser beam to form cavities. The negative electrode manufacturing method may be performed using the above-described negative electrode manufacturing device.

The cavity formation step comprises a levitation step in which an air levitation unit sprays air toward the negative electrode base material to support the negative electrode base material toward the scanner.

In the cavity formation step, the nanosecond pulse laser beam may be irradiated in a multi-shot manner or a single-shot manner.

The pulse energy of the nanosecond pulse laser beam may be set to be 0.2 mJ or more and 2.0 mJ or less, and the cavity, which is, accordingly, formed, may be arranged to have a depth of 20 µm or more and 50 µm or less.

In another example of the present invention, the nanosecond pulse laser beam may be split into multiple beams through a diffraction optics system. In this case, the cavity formation step may be performed in a manner that a scanner receiving the laser beam from the diffraction optics system scans with multiple beams.

A plurality of scanners may be disposed on the negative electrode base material, and each scanner may form a cavity for a designated region. In this instance, the plurality of scanners may be disposed in a single row along the electrode-length direction of the negative electrode base material.

The scanner may be a high-speed scanner, and a scan speed of the high-speed scanner may be determined considering a laser frequency and a dot spacing.

Furthermore, the cavity formation step may be performed while the negative electrode base material travels along a transfer roller.

### Advantageous Effects

As discussed above, the negative electrode manufacturing method and negative electrode manufacturing device according to one example of the present invention can improve the problems of the conventional art.

By performing high-speed structuring using the nanosecond pulse laser unit and the scanner, the cavity formation processing speed can be significantly improved. Through this, it is possible to increases the efficiency of the negative electrode manufacturing process, and it is possible to implement the process suitable for mass production.

Also, upon the structuring process, by spraying air toward the negative electrode base material, it is possible to minimize flow and vibration of the negative electrode base material.

Furthermore, in the negative electrode manufacturing method and negative electrode manufacturing device according to the present invention, as the nanosecond pulse laser unit forms cavities in the negative electrode base material, it is intended to provide a negative electrode manufacturing method and a negative electrode manufacturing device, capable of effectively increasing the speed of the structuring process.

In addition, the negative electrode manufacturing method and negative electrode manufacturing device of the present invention uniformly forms cavities at regular intervals in the electrode-length direction of the negative electrode base material using the multiple beam splitting through the diffraction optics system and the single-row arrangement of multiple scanners, whereby it is possible to improve the electrode quality, and it is possible to increase the speed of the structuring process.

Also, the present invention implements continuous production in the roll-to-roll manner through the transfer roller, and precise distance keeping and flow prevention of the negative electrode base material through the air levitation unit, whereby it is possible to form cavities which are suitable for mass production, and precise and stable.

Furthermore, the negative electrode manufactured through the negative electrode manufacturing method and negative electrode manufacturing device of the present invention comprises uniformly distributed cavities, so that it is possible to shorten the movement path of lithium ions, and it is possible to improve the impregnation property of the electrolyte. Consequently, the secondary battery thus manufactured can exhibit significantly improved fast-charge and lifespan characteristics.

### Description of Drawings

Figure 1 is a schematic diagram showing a typical negative electrode structuring laser processing method.
Figure 2 is a configuration diagram schematically showing components of an optics system in a negative electrode manufacturing device according to one example of the present invention.
Figure 3 is a perspective diagram schematically showing an operation appearance of a scanner and an F-theta lens in a negative electrode manufacturing device according to one example of the present invention.
Figure 4 is a perspective view schematically showing an appearance of negative electrode structuring using a negative electrode manufacturing device according to one example of the present invention.
Figures 5 to 7 are schematic diagrams showing appearances of moving directions and positions of a laser beam irradiated from a negative electrode manufacturing device according to one example of the present invention.
Figure 8 is a schematic diagram schematically showing appearances of cavities formed according to scan speeds of a scanner in a negative electrode manufacturing device according to one example of the present invention.
Figure 9 is a flowchart showing steps of a negative electrode manufacturing method according to one example of the present invention.

### Mode for Invention

Hereinafter, a negative electrode manufacturing device (100) and a negative electrode manufacturing method (200) according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

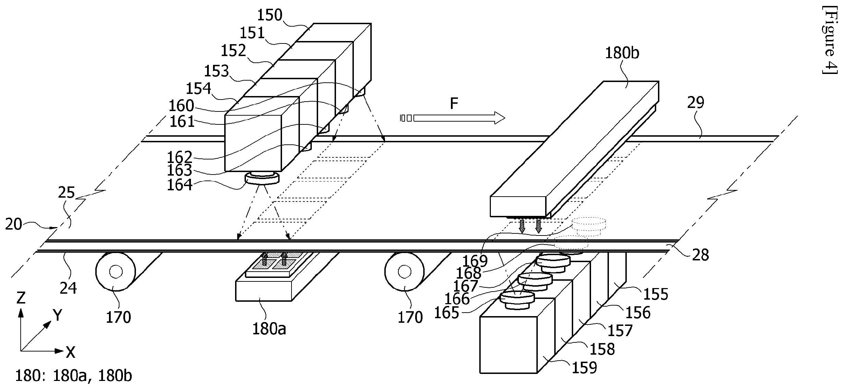

Figure 2 is a configuration diagram schematically showing components of an optics system in a negative electrode manufacturing device (100) according to one example of the present invention. Figure 3 is a perspective diagram schematically showing an operation appearance of a scanner (150) and an F-theta lens (160) in a negative electrode manufacturing device (100) according to one example of the present invention. Then, Figure 4 is a perspective view schematically showing an appearance of negative electrode structuring using a negative electrode manufacturing device (100) according to one example of the present invention.

Referring to Figures 2 to 4, the negative electrode manufacturing device (100) related to one example of the present invention comprises a nanosecond pulse laser unit (110) and a plurality of scanners (150~159).

The nanosecond pulse laser unit (110) is arranged to emit a nanosecond pulse laser beam. Here, the nanosecond pulse laser means a laser having a pulse width between 1 to 999 nanoseconds.

The scanner (150) may scan the emitted nanosecond pulse laser beam onto a surface of a coated portion (25) in a negative electrode base material (20). Here, the negative electrode base material (20) comprises a current collector (24) and a coated portion (25) on which an electrode active material (negative electrode active material) is coated on such a current collector (24). Then, by undergoing a heating and drying process of vaporizing a solvent in the coated portion (25) prior to a negative electrode structuring process, and a rolling process of pressurizing the coated portion with a rolling roller, the negative electrode base material (20) may be in a state with a density and hardness in which the shape of the coated portion is not easily deformed.

In this document, the x-axis direction may represent a transfer direction (F) of the negative electrode base material (20), and the y-axis direction may represent an electrode-length direction of the negative electrode base material (20).

Referring to Figures 3 and 4, the scanner (150) may utilize a galvanometer method. Galvanometers (15-1, 15-2) finely adjust angles of mirrors (15-3, 15-4) according to an intensity of a control current. A biaxial galvanometer system controls the beam in the X-axis and Y-axis directions by disposing two galvanometers (15-1, 15-2) at a right angle. The beam incident on the scanner (150) is reflected by a first mirror (15-3) connected to a first galvanometer (15-1), and then reflected again by a second mirror (15-4) connected to a second galvanometer (15-2), and finally passes through the F-theta lens (160) to reach the surface of the negative electrode base material (20).

Therefore, the negative electrode manufacturing device (100) of the present invention is provided with a nanosecond pulse laser unit (110) and a scanner (150), thereby enabling high-speed structuring of the negative electrode using a nanosecond pulse laser.

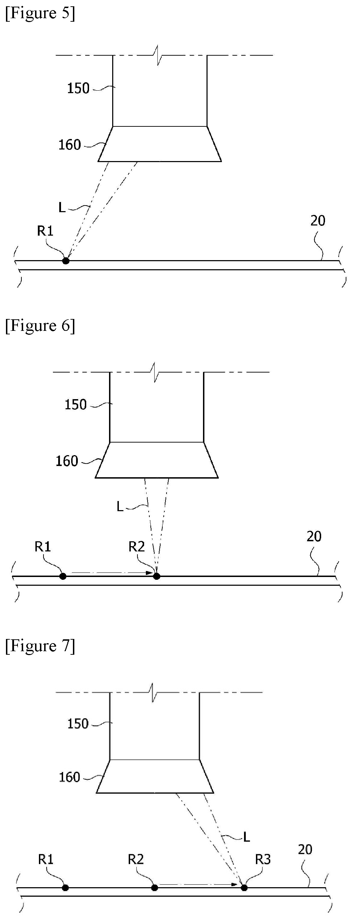

Figures 5 to 7 are schematic diagrams showing appearances of moving directions and positions of a laser beam (L) irradiated from a negative electrode manufacturing device (100) according to one example of the present invention.

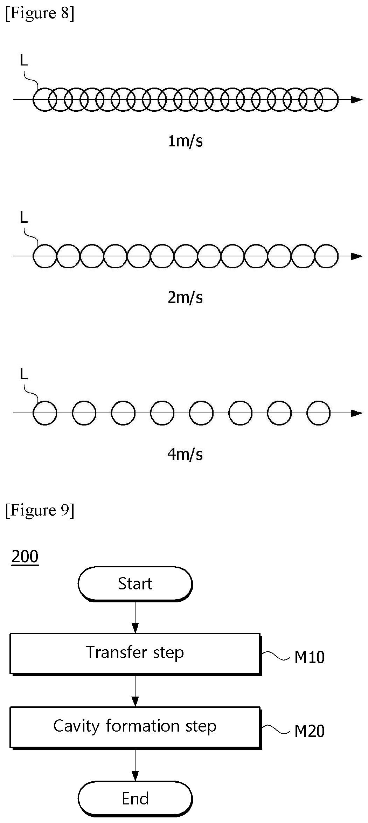

Referring to Figures 2 to 7, the scanner (150) of the negative electrode manufacturing device (100) of the present invention may adjust the moving direction of the incident laser beam (L) to move the irradiation position on the surface of the negative electrode base material (20). For example, in Figure 6, the laser beam passing through the scanner (150) and the F-theta lens (160) may be irradiated at a position R1, and then as in Figures 7 and 8, the galvanometers (15-1, 15-2) of the scanner (150) may rotate the mirrors (15-3, 15-4) to move the irradiation position of the laser beam from R1 to R2, and to move again from R2 to R1.

Figure 8 is a schematic diagram schematically showing appearances of cavities formed according to scan speeds of a scanner (150) in a negative electrode manufacturing device (100) according to one example of the present invention.

Referring to Figures 2 to 4, and 8, the laser beam (L) irradiated by the nanosecond pulse laser unit (110) of the present invention may vary intervals between processed points depending on the scan speed of the scanner (150). For example, when the scan speeds are 1 m/s and 2 m/s, the processed points overlap and appear to be processed linearly, and when the scan speed is 4 m/s, the processed points are spaced apart and appear to be processed as independent points. That is, when the scan speed is slow compared to the frequency for the pulses to overlap, the processed points appear to be processed linearly, and when the scan speed is fast, the processed points appear to be processed as independent points.

The nanosecond pulse laser unit (110) may irradiate the surface of the negative electrode base material (20) with the nanosecond pulse laser beam (L) in a multi-shot manner or a single-shot manner.

Particularly, the nanosecond pulse lasers have higher pulse energy and longer pulse widths than picosecond or femtosecond lasers, whereby they may be advantageous for single-shot processing. Here, the single-shot processing means a method in which a single laser pulse is used to irradiate each designated cavity formation location once. Therefore, the present invention can be advantageous for single-shot processing because it can provide sufficient energy to effectively remove negative electrode active materials such as graphite using a nanosecond pulse laser.

On the other hand, multi-shot processing is a method of using multiple laser pulses to form a single cavity. When the multi-shot processing is applied to negative electrode structuring cavity formation processing, the laser beam irradiation is required twice or more, to form a single cavity, so that when compared to a processing path of the single-shot method, an additional path moving in the transfer direction (F) of the negative electrode base material may be required.

Meanwhile, the pulse energy of the nanosecond pulse laser beam may be set to 0.2 mJ or more and 2.0 mJ or less. Furthermore, in such an energy range, the cavity depth may be formed to be 20 µm or more and 50 µm or less. These ranges represent an optimal range between effective removal of the negative electrode active material and current collector protection. That is, in 0.2 mJ or less, it is difficult to form a cavity with a sufficient depth, and if it is more than 2.0 mJ, the risk of current collector damage may increase. Similarly, a cavity of less than 20 µm does not provide a sufficient space for lithium-ion insertion/desorption, and a depth exceeding 50 µm may impair structural stability of the negative electrode.

Referring to Figure 2, the negative electrode manufacturing device (100) related to one example of the present invention may comprise a diffraction optics system (140). Specifically, the diffraction optics system (140) is arranged to split a laser beam emitted from a nanosecond pulse laser unit (110) into multiple beams.

More specifically, the diffraction optics system (140) is an optical element with a fine pattern engraved therein, which utilizes the diffraction phenomenon of light to split the beam into a desired pattern. For example, a single beam generated from the laser unit (110) is split into multiple beams (L4, L5) while passing through the diffraction optics system (140).

For example, the diffraction optics system (140) may split the laser beam emitted from the laser unit (110) into ten beams. Therefore, the present invention can form multiple cavities simultaneously through the diffraction optics system (140), thereby significantly increasing the efficiency of the negative electrode structuring process. Furthermore, the present invention enables simultaneous multi-processing through the multi-beam splitting, whereby it is possible to reduce the overall process time.

Furthermore, the diffraction optics system (140) distributes the beam energy by dividing a single incident beam into multiple emitted beams. For example, a 2 mJ incident beam may be split into ten 0.2 mJ beams.

A plurality of scanners (150~159) is arranged to scan the multiple beams split through the diffraction optics system (140) onto the surface of the negative electrode base material (20). As can be seen in Figures 4 and 5, the plurality of scanners (150~159) scans the multiple beams split by the diffraction optics system (140) onto the surface of the negative electrode base material (20). Each scanner (150) is configured to form a cavity for a designated region of the negative electrode base material (20).

Referring to Figure 4, the negative electrode manufacturing device (100) of the present invention may be provided with a plurality of scanners (150~159), which may be disposed in a single row along the electrode-length direction (Y-axis direction) of the negative electrode base material (20). Here, the electrode-length direction means a direction connecting uncoated portions (28, 29) on both sides where electrode tabs are to be formed on the negative electrode base material (20). The plurality of scanners (150~159) thus disposed in a single row may each be arranged to form a cavity for a designated region on the negative electrode base material (20).

The plurality of scanners (150~159) may be disposed in a single row, considering the maximum field size of the F-theta lens (160) provided for processing the negative electrode base material (20) in the electrode-length direction (Y-axis direction). For example, the maximum field size of a commonly used F-theta lens (160) may be 50 mm to 100 mm. For example, when the width of the negative electrode base material (20) is 1000 mm and the maximum field size of the F-theta lens (160) is 100 mm, at least 10 scanners are required.

Therefore, the present invention enables uniform structuring across the entire width of the negative electrode base material (20), as the scanners (150~159) are disposed in a single row along the electrode-length direction (Y-axis direction) of the negative electrode base material (20). Therefore, the present invention can uniformly form cavities in the electrode-length direction (Y-axis direction) of the negative electrode base material (20) at regular intervals.

Furthermore, the present invention can significantly improve the processing speed through the multi-beam splitting through the diffraction optics system (140) and the single-row arrangement of the plurality of scanners (150~159).

F-theta lenses (160~169) may be disposed at the bottom of each of the multiple scanners (150~159). The F-theta lenses (160~169) may be arranged to precisely focus the laser beams scanned from the multiple scanners (150~159) onto the surface of the negative electrode base material (20).

As in Figure 5, the negative electrode manufacturing device (100) related to one example of the present invention may comprise a transfer roller (170). The transfer roller (170) may support the negative electrode base material (20) to allow for laser processing while continuously transferring it. Through this, the present invention enables continuous production in a roll-to-roll manner.

Specifically, the negative electrode manufacturing device (100) related to one example of the present invention may apply an on-the-fly (OTF) processing method. Specifically, OTF processing measures moving speed information of the negative electrode base material (20) in real time, and the scanner (150) adjusts the position of the laser beam (L) in real time, considering the measured moving speed, whereby it is possible to form cavities at precise positions.

For example, the OTF processing generates a real-time processing path through the following processes. First, the moving speed of the negative electrode base material (20) is measured in real time using a sensor such as an encoder (not shown). Next, the motion vector of the scanner (150) is calculated based on the measured speed information. Finally, the movement vector of the negative electrode base material (20) and the motion vector of the scanner are synthesized to generate a new processing path in real time.

As in Figure 4, the negative electrode manufacturing device (100) related to one example of the present invention may comprise an air levitation unit (180). The air levitation unit (180) may be arranged to support the negative electrode base material (20) toward the scanner (150) by spraying air toward the negative electrode base material (20). At this time, the air levitation unit (180) may spray air so that a surface pressure, which uniformly pressurizes the negative electrode base material (20), is generated. For example, an air discharge opening of the air levitation unit (180) may be in a planar rectangle. In the air levitation unit (180), the air discharge opening may correspond to the width size of the negative electrode base material (20) in the electrode-length direction.

For example, a first air levitation unit (180a) may be located at the bottom of the negative electrode base material (20) opposite to the scanners (150 to 154) arranged in a single row at the top of the negative electrode base material (20) based on the negative electrode base material (20). A second air levitation unit (180b) may be located at the top of the negative electrode base material (20) opposite to the scanners (155-159) arranged in a single row at the bottom of the negative electrode base material (20) based on the negative electrode base material (20).

Accordingly, while the laser beam (L) from the scanners (150~159) is irradiated onto the surface of the negative electrode base material (20), the air levitation unit (180) sprays air toward the negative electrode base material (20), whereby the present invention can stably support the negative electrode base material (20) toward the scanners (150~159). Accordingly, the present invention can minimize flow and vibration of the negative electrode base material (20) during the negative electrode structuring process, thereby forming cavities at constant intervals and depths on the surface of the negative electrode base material (20).

Therefore, by comprising the air levitation unit (180), the present invention can precisely maintain the distance between the negative electrode base material (20) and the scanner, and prevent damage to the negative electrode base material (20).

Hereinafter, a negative electrode manufacturing method (200) according to one example of the present invention will be described.

Figure 9 is a flowchart showing steps of a negative electrode manufacturing method (200) according to one example of the present invention.

Referring to Figure 9, the negative electrode manufacturing method (200) of the present invention comprises a transfer step (M01) and a cavity formation step (M02).

In the transfer step (M01), the negative electrode base material (20) provided with a coated portion (25) formed by coating a current collector (24) with a negative electrode active material is transferred. Specifically, the negative electrode base material (20) may be continuously transferred through a transfer roller (170).

In the cavity formation step (M02), a nanosecond pulse laser is irradiated onto the surface of the current collector coated with the negative active material to form cavities. During this process, an air levitation unit (180) sprays air toward the negative electrode base material (20) together with a transfer roller (170), whereby it is possible to levitate the negative electrode base material (20). In this instance, the nanosecond pulse laser beam may be irradiated in a multi-shot manner or a single-shot manner. The single-shot method is advantageous in terms of the processing speed and precision degree, and particularly, suitable for mass production.

The pulse energy of the nanosecond pulse laser beam may be set to 0.2 mJ or more and 2.0 mJ or less, and in such an energy range, the cavity depth may be formed in 20 µm or more and 50 µm or less.

In the cavity formation step (M02), the nanosecond pulse laser beam may be split into multiple beams using a diffraction optics system (140). For example, a single 2 mJ laser beam may be split into ten 0.2 mJ beams.

A plurality of scanners (150~159) scans the multiple beams thus split. By disposing multiple scanners (150~159) in a row along the electrode-length direction (Y-axis direction) of the negative electrode base material (20), so that each scanner can form a cavity for a designated region.

The plurality of scanners (150~159) may be high-speed scanners, where their scan speeds are determined, considering the laser frequency and the desired dot spacing. For example, if the laser frequency is 30 kHz and the desired dot spacing is 300 µm, the required scan speed is 9 m/s.

Therefore, the negative electrode manufacturing method (200) of the present invention enables high-speed single-shot structuring using a nanosecond pulse laser by such a constitution. Particularly, the processing speed can be significantly improved through the multi-beam splitting through the diffraction optics system (140) and the arrangement of multiple scanners (150~159). Furthermore, through the transfer roller (170) and air levitation unit (180), it is possible to realize precise processing while enabling continuous production.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

In accordance with the negative electrode manufacturing method and negative electrode manufacturing device according to one example of the present invention, the processing speed for cavity formation can be significantly improved by performing high-speed structuring.

## Claims

1. A negative electrode manufacturing device for forming cavities in a surface of a current collector coated with a negative electrode active material, comprising:
a nanosecond pulse laser unit emitting a nanosecond pulse laser beam;
a scanner scanning the emitted nanosecond pulse laser beam onto a surface of a negative electrode base material; and
an air levitation unit spraying air toward the negative electrode base material in a direction toward the scanner, to support the negative electrode base material.

2. The negative electrode manufacturing device according to claim 1, wherein
the air levitation unit sprays air to apply a surface pressure to the negative electrode base material.

3. The negative electrode manufacturing device according to claim 1, wherein
the negative electrode base material is arranged to pass between the scanner and the air levitation unit.

4. The negative electrode manufacturing device according to claim 1, wherein
the nanosecond pulse laser unit irradiates
the surface of the negative electrode base material with the nanosecond pulse laser beam in a multi-shot manner or a single-shot manner.

5. The negative electrode manufacturing device according to claim 1, wherein
the nanosecond pulse laser beam has pulse energy set to be 0.2 mJ or more and 2.0 mJ or less, and the cavity is arranged to have a depth set to be 20 µm or more and 50 µm or less.

6. The negative electrode manufacturing device according to claim 1, further comprising
a diffraction optics system for splitting the laser beam emitted from the nanosecond pulse laser unit into multiple beams.

7. The negative electrode manufacturing device according to claim 1, wherein
a plurality of scanners is disposed on the negative electrode base material, and each scanner is arranged to form a cavity for a pre-designated region.

8. The negative electrode manufacturing device according to claim 7, wherein
the plurality of scanners is disposed in a single row along the electrode-length direction of the negative electrode base material.

9. The negative electrode manufacturing device according to claim 1, wherein
the scanner is arranged to scan multiple beams in a single-shot manner that the laser beam is irradiated to each location only once.

10. The negative electrode manufacturing device according to claim 1, further comprising
a transfer roller for transferring the negative electrode base material.

11. A negative electrode manufacturing method comprising:
a transfer step of transferring a negative electrode base material in which a negative electrode active material is coated on a current collector, and
a cavity formation step of irradiating the surface of the current collector coated with the negative electrode active material with a nanosecond pulsed laser beam to form cavities, wherein
the cavity formation step comprises a levitation step in which an air levitation unit sprays air toward the negative electrode base material to support the negative electrode base material toward the scanner.

12. The negative electrode manufacturing method according to claim 11, wherein
in the cavity formation step,
the nanosecond pulse laser beam is irradiated in a multi-shot manner or a single-shot manner.

13. The negative electrode manufacturing method according to claim 11, wherein
the nanosecond pulse laser beam has pulse energy of 0.2 mJ or more and 2.0 mJ or less, and the cavity has a depth of 20 µm or more and 50 µm or less.

14. The negative electrode manufacturing method according to claim 11, wherein
the nanosecond pulse laser beam is split into multiple beams through a diffraction optics system, and in the cavity formation step, a scanner receiving the laser beam from the diffraction optics system scans with multiple beams.

15. The negative electrode manufacturing method according to claim 11, wherein
a plurality of scanners is disposed on the negative electrode base material, and each scanner forms a cavity for a designated region., and
the plurality of scanners is disposed in a single row along the electrode-length direction of the negative electrode base material.
